# EUROPEAN PATENT SPECIFICATION

(11) **EP 1 946 094 B1**
(45) Date of publication and mention of the grant of the patent: **20.04.2011**
(21) Application number: 05815707.4
(22) Date of filing: 02.11.2005
(51) Int. Cl.: G01N 27/447

(54) **FORCE-PROMOTED SAMPLE RECOVERY IN GEL ELECTROPHORESIS**
KRAFTUNTERSTÜTZTE PROBENWIEDERGEWINNUNG IN DER GELELEKTROPHORESE
RECUPERATION D'ECHANTILLONS SOUS L'ACTION D'UNE FORCE, EN ELECTROPHORESE SUR GEL

(43) Date of publication of application: 23.07.2008
(73) Proprietor: Agilent Technologies, Inc., Santa Clara CA 95051 (US)
(72) Inventor: PRECKEL, Tobias, 76337 Waldbronn (DE)
(74) Representative: Barth, Daniel Mathias
(86) International application number: PCT/EP2005/055686
(87) International publication number: WO 2007/051492

(56) References cited:
- EP-A- 0 407 141
- WO-A-87/02132
- WO-A-03/058226
- WO-A-2005/029061
- US-A- 4 181 594
- US-A- 4 726 889
- US-A- 4 994 166
- US-A- 5 039 493
- US-A1- 2003 032 201
- US-A1- 2004 238 364

## Description

### BACKGROUND ART

The present invention relates to force-promoted sample recovery in gel electrophoresis.

Electrophoresis is a method to analyze complex mixtures of substances, for instance biological substances like proteins. By electrophoresis, a mixture of different substances may be separated by taking into account the intrinsic charge characteristics of the substances, particularly different isoelectric points of different substances. For an electrophoresis analysis, an analyte may be loaded onto a gel strip, and then an electric field is applied along the gel strip so that the electrically charged molecules are separated based on their different electric charge and/or size ratio. Along an extension of a gel strip for electrophoresis, a gradient of the local pH value may be generated so that a component having a particular isoelectric point moves along the gel strip and stops at a characteristic position at which the net charge of the molecule is zero (the corresponding pH value is called isoelectric point).

US 5,989,400, US 6,113,766 and US 6,599,410 B1 disclose devices for gel electrophoresis.

In conventional gel electrophoresis as described above, substances of an analyte are separated into different fractions which are spatially separated along the extension of the gel strip.

WO 01/86279 A1 and WO 03/019172 A2 disclose an alternative electrophoresis method, wherein a plurality of compartments containing a solution are arranged above a gel strip. After having separated the different fractions of the analyte by applying an electric field, a fraction of substances stopped at a particular position along the gel strip is accumulated in a solution contained in an adjacent one of the plurality of compartments. In comparison to the above-mentioned conventional electrophoresis which may also be denoted as "in-gel electrophoresis" in this specification, the approach of WO 01/86279 A1 and WO 03/019172 A2 may also be denoted as "off-gel electrophoresis" in this specification, since the separated components may be provided off the gel.

After having carried out a gel electrophoresis experiment, it may be desirable to recover the sample from the gel material in the case of "in-gel electrophoresis" or from the gel and/or the compartments in the case of "off-gel electrophoresis".

WO 2006/063625 A1 discloses fractionation using electro elution.

WO 87/02132 A1 discloses an apparatus which includes the combination of a submarine gel tank, for the electrophoretic separation of, for example, nucleic acid molecules on agarose slab gels, with a vacuum applying means which transfers the separated molecules from the gel, without further handling, to a filter membrane by means of a controlled vacuum.

An apparatus for carrying out horizontal gel electrophoresis for separation and subsequent vacuum-assisted transportation of macromolecules to a support membrane to facilitate detection is described in US 4,726,889 A. The entire procedure is conducted in one cartridge.

EP 0407141 A1 discloses the transfer of macromolecules from a source medium to a transfer medium employing positive pressure to urge a sample from the source medium to the transfer medium. The source and transfer media are disposed in adjacent relation, a positive pressure such as air pressure, fluid pressure, air and fluid pressure or mechanical pressure is applied against the source medium, and the molecule is recovered from the transfer medium.

### DISCLOSURE

It is an object of the invention to improve recovery of sample material in gel electrophoresis. The object is solved in accordance with the independent claim. Exemplary embodiments are shown by the dependent claims.

According to an exemplary embodiment, a gel strip device is provided having a permeable substrate and gel material provided for instance on or under the permeable substrate. The term "permeable" may be particularly denoted as a property of the substrate which allows specific material (for example material having sufficiently small components) under specific external parameters (for example in the presence of a sufficient pressure) to pass through the substrate, whereas other material (for example material having sufficiently large or immobile components) may be prevented from passing the substrate. For instance, the size of particles and/or the viscosity of a material may define whether the permeable substrate can be passed by the material or not, in combination with actual physical parameters like mechanical force acting on the particles, the temperature, or the like. When the size of the particles is smaller than a threshold value and/or when the viscosity is higher than a threshold value, then the material is not passed through the permeable substrate.

Microscopically, such a permeable material may comprise pores formed in the substrate, wherein the transmission of material is performed by a flow of material through the pores.

Thus, the permeable material may be penetrated by specific material like an aqueous or a fluid solution, whereas other (solid or high viscous) materials may be prevented from permeating the permeable material.

Examples for such permeable materials are porous materials like porous plastics or rock, sediment or soil. Permeable may also denote a material allowing the passage of fluid, whereas the passage of a solid or a gel-like material is prevented. In such a scenario, analyte material may penetrate through the permeable substrate, and gel material may be prevented from passing the substrate. Thus, pores or voids or openings may be provided within the permeable substrate to allow a low viscosity material like a liquid analyte to pass through the pores, whereas the gel material is prevented from passing through the pores, due to the high viscosity of gel material.

A "gel material" may particularly be denoted as an essentially form-resistant, but easily deformable material with material properties between those of a liquid phase and those of a solid phase. In colloidal chemistry, a gel may be denoted as a substance between a half-solid and a solid state which may have amorphous properties.

The properties of the permeable substrate in combination with the properties of the gel material may allow to use an embodiment of the gel strip device for efficiently recovering material, for instance fractions of a fluidic analyte which have been stopped or trapped at particular positions or portions of the gel strip device or with respect to the gel strip device as a result of a gel electrophoresis experiment. By generating a mechanical force acting on such fractions, the analyte immobilized in the gel material can be removed from the material and can be forced by the mechanical force to be transported from the gel or from above the gel through the gel and through the permeable substrate and can be recovered in one or more containers provided below the permeable substrate. In contrast to this, the gel material may be prevented from passing the permeable substrate and may thus remain supported by the permeable substrate. In order to allow such recovery the gel composition should be such that the molecules are not retained in the gel due to their size (e.g. in an electrophoresis experiment where analytes are separated based on their isoelectric point the gel merely serves as a scaffold to provide the pH gradient but not as a sieve to retain analytes based on their size).

Such a gel strip device may be implemented in the context of an "off-gel electrophoresis experiment" or in the context of an "in-gel electrophoresis experiment".

For an electrophoresis analysis, a dehydrated gel strip may first be hydrated, wherein a pH gradient may be provided along an extension of the gel strip as a basis for an isoelectric focusing of an analyte under examination. Along the extension of the gel strip, an electric field may be applied to the gel strip by means of contacting electrode members of a gel electrophoresis device which may be brought to a defined electrical potential by a connected electric circuitry. Such electrode members may be electrically coupled by directly contacting the gel strips or may be dipped in electrolyte containing cavities of compartment frames which may ("off-gel electrophoresis experiment") or may not ("in-gel electrophoresis experiment") be provided and brought in contact with the gel strip. As a result of the generated electric field, an electric force takes effect on charged components (for instance different proteins of a biochemical sample) of an analyte in a gel strip. Thus, the components of the analyte may be moved along the gel strip, in dependence of the local pH value. After having reached an equilibrium where analytes are located at the respective pH that constitutes the analytes' isoelectric point the components remain at respective positions of the gel strip, wherein such positions are defined by the charge properties of the respective component in combination with the spatially dependent pH gradient of the gel strip.

For an "in-gel" operation mode of such a gel electrophoresis device, different fractions or components of the analyte being accumulated at different positions within the gel strip may be recovered from the gel strip for instance by means of a mechanical force so that the components can be recovered after having passed the porous substrate. In contrast to this, the gel material may be prevented from passing the substrate and thus remains supported by the substrate. No compartment frames are necessary for an "in-gel" analysis.

For an "off-gel" operation mode of the gel electrophoresis device, a gel strip (particularly the gel material of the gel strip) may be coupled with a compartment frame which may be filled with a liquid solution. Such a compartment frame may be mounted above, below or laterally of the gel strip, however in functional or fluidic connection with the gel material. Electrode members as electric field sources may be contacted directly with the gel strip, for instance with end portions of the gel strip. Alternatively, the electrode members may contact the compartment frames, particularly electrically conductive liquid containing cavities of the compartment frames adjacent to (end) portions of the gel strip so as to generate an electric field along an extension of the gel strip. Thus, the gel strip device may be operated for performing an "off-gel" analysis, wherein the general concept of "off-gel electrophoresis is specified in WO 01/86279 A1 and WO 03/019172 A2. For recovering analytes after having carried out an off-gel electrophoresis experiment, mechanical force may be applied so that analyt which is accumulated in a portion of the gel strip and/or in a cavity of the compartment frame can pass through the porous substrate and can be accumulated in a container provided below.

According to an exemplary embodiment, an apparatus for recovering a fluid sample from a gel strip device of an embodiment or of a conventional type may be provided. In this apparatus, mechanical force may be generated acting on components of a fluid to be recovered so that this force may allow to separate the desired component from other components.

For instance, a gel strip having a permeable substrate may be treated with such an apparatus. In this case, the material to be recovered may be pressed, by a force generated by a force generating unit, through the permeable substrate to be accumulated in a container or the like. The permeable substrate may be designed in such a manner that the gel material remains supported by the permeable substrate, whereas the component to be recovered may be pressed through the substrate. The apparatus may be used to recover material from a gel strip which has been subject of an "in-gel" or an "off-gel" electrophoresis. In other words, the gel strip device may consist of the permeable substrate supporting the gel or may comprise the permeable substrate, the gel and a compartment frame (removably or fixedly) attached to the gel or brought in fluid communication with the gel.

Thus, a fraction (for instance of proteins or nucleic acids) trapped in a gel as a consequence of a previously executed gel electrophoresis investigation can be pressed, by means of a mechanical force, out of the gel strip device through a porous substrate into a (micro-)titer plate.

Embodiments may be applied in the frame of an off-gel centrifugation or in the frame of an in-gel centrifugation. Particularly in the context of an off-gel experiment followed by centrifugation in which a sample is provided and/or separated in cavities of a compartment frame, a complicated and in many cases incomplete recovery of sample by using a pipette to remove sample from the cavities of the compartment frames may be dispensable. Using a pipette to remove material from a frame or well may not allow to completely recover the material. However, by applying a mechanical force for a sufficient time to the gel strip device may allow to press the material to be recovered through the permeable substrate so that the material can be accumulated easily and almost completely in a container. Thus, recovery is possible from the gel material itself or from a compartment frame in fluid communication with the gel.

Using a gel with a porous substrate allows to guide the material to be recovered into receptacles or other containers by means of centrifugation or applying a pressure by using a pump. Furthermore, it may be optionally possible to promote elution by using a specifically designed elution buffer for eluting the components to be recovered from the gel.

Thus, after an isoelectric focusing of components in the gel and/or in compartments, which may have the consequence that a separation and concentration of the components into fractions of material may be obtained, the fractions which are present in the gel and/or which have moved into the compartments may be easily recovered in an efficient manner by a centrifugation so that the fractions are pressed through a porous ground of the gel strip to be recovered in a container positioned below.

It is also possible to provide an array of a plurality of for instance parallel aligned gel strips which may be received in a specifically shaped reception device. Then, an essentially two-dimensional separation or analysis structure can be obtained. If such a two-dimensional gel strip structure is used in combination with a two-dimensional array of compartments, for instance a matrix-like well plate (for instance having 96 wells), it may be possible to use this well plate to recover different components of the gel strip device(s) in the two-dimensionally arranged wells of the well plate.

Thus, the proteins, peptides, nucleic acids or other components of an analyte separated according to their different isoelectric points can be recovered efficiently from the gel or from the compartment frames.

The efficiency or yield of the recovery process may be improved by adding a detergent in the compartment frames or directly into the gel, so that the protein or other components to be separated may be charged again and may thus be better resolvable from their environment. A promotion of the elution of components may also be achieved by changing the chemical milieu (for example the buffer) surrounding the components.

The force applied to the material to be recovered may be applied by means of centrifuging or by applying a mechanical pressure to the components. This may include increasing the pressure on one side of the gel strip device (for instance on the side of the gel opposing the permeable substrate) and/or by reducing the pressure at one side of the gel strip device (for instance at the side of the permeable substrate opposing the gel).

For instance, a permeable substrate or porous intermediate layer may be provided which may retain gel from being removed from the substrate supporting the gel material. As an alternative to a porous substrate, the substrate may also be designed as some kind of web, wherein meshes of such a web may be located at such a distance from one another that gel may not pass through the meshes, but sample may pass through the meshes.

When the gel strip device is provided as a disposable member, which is not used again after a single use, any contamination of a gel strip device may be securely avoided.

A porous substrate may comprise any suitable material, for instance a polymer. By a polymerization, pores may be generated in the material so that the substrate may be provided with the permeable property. For instance, polymers on the basis of cellulose may be used. The size of the pores may be in the lower micrometer range to the upper nanometer range. It is also possible to generate pores in a material by means of a laser treatment.

Thus, according to an exemplary embodiment, a mechanical force in combination with a permeable substrate of a gel strip device may be used so that force effects the material to be recovered in the direction vertical to a surface of the permeable substrate, so that essentially all material can be recovered after having performed the gel electrophoresis experiment.

The generation of a mechanical force for eluting material located in a gel strip device may be combined with electro elution as described in PCT/EP2004/053591. For instance, a combination of electrical and mechanical forces may be used for a proper elution of sample fractions after a gel electrophoresis device.

In the following, further exemplary embodiments will be described.

Next, exemplary embodiments of the gel strip device will be described. However, these embodiments also apply for the apparatus for recovering a fluid sample from a gel strip device and for the method of recovering a fluid sample from a gel strip device.

The gel material of the gel strip device may be provided on the permeable substrate in a manner to generate a pH gradient along an extension of the permeable substrate. Additionally or alternatively, the gel material may be provided on the permeable substrate in a manner having a varying pH value along an extension of the permeable substrate. By providing a spatial dependence of the pH value or a pH gradient along an extension of the gel strip device, it is possible to separate different components of an analyt by means of so-called isoelectric focusing. For instance, the pH value along the gel strip may, after having rehydrated the gel material, may vary from pH 2 at a first end portion to pH 10 at a second end portion. Along the extension of the gel strip device, the pH value may vary monotonically.

The permeable substrate may comprise pores. The pores may be designed in such a manner that the substrate is permeable for a material which has dimensions lower than the dimensions of the pores, and is impermeable for materials having larger dimensions.

The permeable substrate may comprise a polymer material having pores or voids or holes. Additionally or alternatively, the permeable substrate may comprise pores formed by means of a laser. Using a laser it may be possible to generate pores in a spatially defined manner, since irradiating suitable material with a laser can modify the material in a characteristic manner. For instance, pores may be burned into a material by means of a suitably operated laser.

The permeable substrate may comprise pores with dimensions in the range between 1 nm and 10 µm, particularly between 10 nm and 1 µm, and more particularly between 50 nm and 0.5 µm. Therefore, the size of the pores can be particularly designed to correspond to a size of molecules of a material which is to be recovered from the gel material. For instance, when macromolecules like proteins or genes are to be recovered from the gel material or from a compartment coupled with the gel material, the size of the pores may be selected in such a manner that the genes or proteins are small enough to be transmittable through the pores.

Furthermore, the permeable substrate of the gel strip device may comprise pores with dimensions so that the gel material is incapable of passing the pores but a liquid analyte (for instance a biochemical sample) is capable of passing the pores. The permeable substrate may comprise pores with dimensions adapted to substantially retain the gel material while allowing a liquid analyt to pass through the pores. Thus, the dimensions and/or the viscosity of the gel material, the dimensions and/or the viscosity of the molecules of the material to be recovered, and the dimensions and/or the surface properties of the pores may be considered when selecting parameters of the permeable substrate so as to allow only the material to be recovered to pass through the pores, whereas the gel material is prevented from passing through the pores.

The gel strip device comprises a compartment frame to be located close to the gel material. The gel strip device may be adapted for an "off-gel" electrophoresis experiment. In this context, the compartment frame(s) may be brought in fluid communication with the gel material, and the gel material, in turn, may be supported on or by the permeable substrate. After having carried out an "off-gel" electrophoresis experiment, material trapped in the gel and/or in the wells formed by the compartment frames (which may be filled with an analyt and/or with a buffer solution) may be recovered by effecting a mechanical pressure to the material to be recovered so that the material can be accumulated after having passed the permeable substrate.

The compartment frame may be located close to the gel material. The gel material may be located between the compartment frame and the permeable substrate. For example, the compartment frame may be located above the gel strip. However, as an alternative to the arrangement of the compartment frame above a gel strip, the compartment frame may be arranged beneath the gel strip or at a lateral position with respect to the gel strip. However, the compartment frame and the gel material should be arranged as to be in fluid communication with one another.

Particularly, the compartment frame may be detachable from the gel material provided on the permeable substrate. Thus, a modular system may be provided in which the compartment frame may be flexibly removed from (or attached to) the gel material. For instance, for a recovery of material from the gel strip, the compartment frame may be removed from the gel strip device. However, it is also possible to recover separated analyt material in an operation state in which the compartment frame is mounted on the gel material which is, in turn, supported by the permeable substrate.

The compartment is adapted for providing a plurality of analyte filled cavities, each being fluid-coupled to the gel material. In other words, an analyte, a buffer or any other solution may be filled (for example by means of a pipette or the like) in each of the cavities of the compartment frame to form a liquid-gel boundary between the compartment frame and the gel strip. This may promote the fluid communication between gel and fluid.

In the following, exemplary embodiments of the apparatus for recovering a fluid sample from a gel strip device will be described. However, these embodiments also apply for the gel strip device and for the method of recovering a fluid sample from a gel strip device.

The gel strip device of the apparatus may be a gel strip device having the above-mentioned features, particularly having a permeable substrate covered with gel material. When a mechanical force is generated to act onto the gel strip device, sample material located at respective portions in the gel and/or in the compartment frames may be transported through the permeable support and may be therefore separated from the gel and/or the compartment frames so as to be recovered in a container positioned adjacent to the permeable substrate.

The receptacle of the apparatus may comprise a plurality of receptacle portions each adapted for receiving an individual gel strip device. In other words, an array-like structure may be provided, wherein a plurality of gel strips may be received (for instance aligned in a parallel manner to one another) in such a receptacle. In such a scenario, a mechanical force may be generated to act on the loaded array to recover simultaneously different components of analyt immobilized in the gel or in the compartment frames of the various gel strip devices received in the receptacle portions.

The apparatus comprises a container adapted for holding sample recovered from the gel strip device. Such a container may be a microtiter array or plate.

The container of the apparatus may be positioned for receiving sample recovered from the gel strip device and passed through the permeable substrate of the gel strip device. By such a configuration, a fast, easy and secure accumulation of the different components in the container may be ensured.

The container comprises a plurality of container segments each adapted for receiving sample recovered from an assigned portion of the gel strip device. For instance, a two-dimensional matrix-like array of container segments may be provided. Such geometry may be combined with a receptacle comprising a plurality of receptacle portions.

The force generating unit may be a centrifuge to generate the mechanical force by rotating the gel strip device. Thus, a centrifuge may be implemented to generate centrifugal forces acting on the material to be recovered. The direction of such a centrifugal force may be selected properly so that the material is pressed, under the influence of the centrifugal force, through the permeable substrate of the gel strip device so as to be recovered in a container.

The force generating unit may also be a device for generating a pressure difference between an upper side and a lower side of the gel strip device. For instance, the force generating unit may generate an overpressure at an upper side of the gel strip device. When the lower side of the gel strip device has a normal pressure or even a low pressure, this pressure difference may generate the mechanical force pressing the material to be recovered through the permeable substrate.

Additionally or alternatively, the force generating unit may be a device for generating a low pressure at a lower side of the gel strip device. By taking this measure, for instance in combination with a high pressure applied above the gel strip device or a normal pressure above the gel strip device, a mechanical force may be generated which may press the material to be recovered through the permeable substrate.

In the following, exemplary embodiments of the method of recovering a fluid sample from a gel strip device will be described. However, these embodiments also apply for the gel strip device and for the apparatus for recovering a fluid sample from a gel strip device.

The method may comprise treating the gel strip device for promoting elution of the sample from the gel strip device. By improving the solubility of the material to be recovered from the gel strip device, it may be easier and the necessary forces may be lower for eluting the material to be recovered from the gel material.

For instance, treating the gel strip device for promoting elution of the sample from the gel strip device may comprise adding a detergent. The term "detergent" may particularly denote any material which is capable of improving the movability of the material to be recovered within the gel. For instance, a soap-like material (in aqueous solution) may be used for this purpose.

Additionally or alternatively, treating the gel strip device for promoting elution of the sample from the gel strip device may comprise altering a buffer of the sample. In other words, a buffer may be selectively chosen so that the specific material to be recovered may be properly dissolved from the gel material in the presence of such a buffer.

The gel strip device may be adapted to be operated in conjunction with a gel electrophoresis device which may be adapted for fluid separation by means of an applied electric field. Such an electric field may be applied to the apparatus by means of electrical contact portions to be coupled with the gel strip.

The apparatus may be part of a measurement device which may be adapted to measure at least one physical, chemical, or biological parameter of a fluid under examination. Examples for physical parameters are temperature, pressure, volume or the like. Examples for chemical parameters are concentrations, a pH value, or the like. Examples for biological parameters are presence or absence of proteins or genes in a solution, biological activity of a sample, or the like.

The measurement device may comprise at least one of a sensor device, a test device for testing a device under test or a substance, a device for chemical, biological and/or pharmaceutical analysis, a fluid separation system adapted for separating compounds of a fluid, a capillary electrophoresis device, a liquid chromatography device, a gas chromatography device, and a mass spectroscopy device. Further exemplary application fields of such a measurement device are gas chromatography, mass spectroscopy, UV spectroscopy, optical spectroscopy, IR spectroscopy, liquid chromatography, microfluidic and capillary electrophoresis bioanalysis. More generally, the apparatus may be integrated in an analysis device for chemical, biological and/or pharmaceutical analysis. Such an analysis device may be a fluid separation device, a liquid chromatography system, an electrophoresis system, or the like. In a realization of the apparatus as a device for chemical, biological and/or pharmaceutical analysis, functions like (protein) purification, electrophoresis investigation or solutions, fluid separation, or chromatography investigations may be performed by the analysis device.

### BRIEF DESCRIPTION OF DRAWINGS

Objects and many of the attendant advantages of embodiments will be readily appreciated and become better understood by reference to the following more detailed description of embodiments in connection with the accompanied drawings. Features that are substantially or functionally equal or similar will be referred to by the same reference signs.

Fig. 1 shows an apparatus for recovering a fluid sample from a gel strip device in a first operation state.

Fig. 2 shows the apparatus of Fig. 1 in a second operation state.

Fig. 3 shows an apparatus for recovering a fluid sample from a gel strip device.

Fig. 4 shows a top view of a part of an apparatus for recovering a fluid sample from a gel strip device.

Fig. 5 shows a top view of another part of the apparatus of Fig. 4.

The illustration in the drawing is schematically.

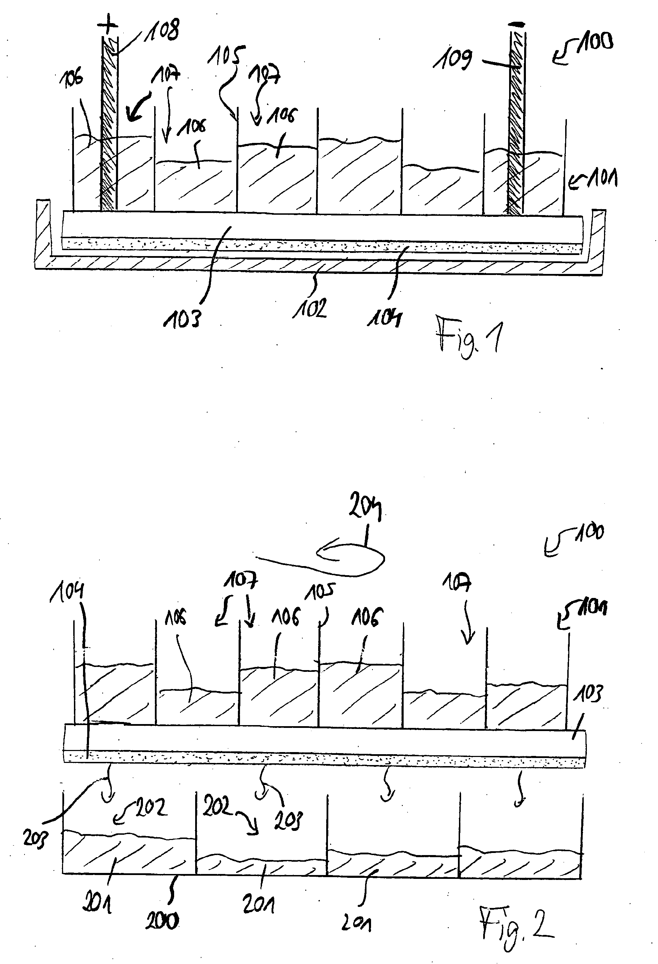

In the following, referring to Fig. 1, an apparatus 100 for recovering a fluid sample from a gel strip device 101 according to an exemplary embodiment will be described.

The apparatus 100 is adapted for carrying out an "off-gel" electrophoresis experiment.

The apparatus 100 comprises a reception element 102 which is shaped and dimensioned for receiving the gel strip device 101. Furthermore, although not shown in Fig. 1, a force generating device is provided which is adapted to generate a mechanical force acting on a fluid sample to be recovered from the gel strip device 101.

The gel strip device 101 comprises gel material 103 which is adapted for providing gel electrophoresis. Furthermore, the gel strip device 101 comprises a porous substrate 104 supporting the gel material 103. The gel material 103 is provided on the porous substrate 104 and provides a varying pH value along an extension of the permeable substrate 104. Referring to Fig. 1, from the left-hand side to the right-hand side of the gel material 103, the pH value increases from pH 2 at the left-hand end portion of the gel 103 to a pH value of 10 at the right-hand side of the gel 103. In order to perform an electrophoresis experiment, it may be necessary to rehydrate the possibly dehydrated gel material 103, that is to say to water the gel material (for instance by providing a suitable buffer solution), in order to made the gel strip device 101 ready for use.

The permeable substrate 104 comprises pores and is made of a polymer material. The pores in the porous substrate 104 may have, for example, dimensions in the order of magnitude between nanometers and micrometers, depending on the material of an analyt to be analyzed. Particularly, the porous substrate 104 comprises pores with dimensions so that the gel material 103 is incapable of passing the pores and the liquid analyt to be recovered, as will be described in the following, is capable of passing the pores. Furthermore, the gel material 103 may be selected to have a sufficiently high value of viscosity, so that the gel material 103 may be hindered or inhibited to be pressed through the pores of the substrate even under the influence of a mechanical force.

Furthermore, since the gel strip device 101 is adapted to perform an "off-gel" electrophoresis experiment, a compartment frame 105 is provided which is located above the gel material 103. Thus, the gel material 103 is located between the compartment frame 105 and the porous substrate 104. The compartment frame 105 is detachable from the gel material 103 and can be assembled or disassembled with the array formed by the porous substrate 104 and the gel 103.

As can further be taken from Fig. 1, the compartment frame 105 is divided into a plurality of analyt 106 filled cavities 107 which are in fluid communication with respective portions of the gel material 103. As can be seen in Fig. 1, different analytes, buffers, electrolytes or other solutions may be filled in, for instance using a pipette, in each of the cavities 107 of the compartment frame 105. The fluid 106 filled in the cavities 107 is in fluid communication with the gel material 103 so that particles may move between the gel material 103 and the fluid 106.

In the following, it will be described how an "off-gel" electrophoresis experiment may be carried out by means of the apparatus 100.

First, the gel strip device 101 can be mounted in the reception 102. Then, the compartment frame 105 may be mounted above the gel material 103. Fluid 106 can be filled in each of the cavities 107 of the compartment frame 105 to be fluid-coupled to the gel material 103. Then, a first electrode 108 and a second electrode 109 may be dipped in corresponding ones of the cavities 107 of the compartment frame 105. The electrodes 108, 109 may provide an electrical contact to an electrically conductive liquid 106 filled in the cavities 107, or may also contact directly the gel 103 at the ground of the cavities 107. As indicated in Fig. 1 by the "+" and "-" signs, an electric voltage can be applied between the electrodes 108, 109 so as to generate an electric field along the extension of the gel material 103. An analyt can be filled in any of the cavities 107, for instance can be filled in the very left or the very right cavity 107 in which the electrodes 108, 109 are dipped.

It is believed that by processes like diffusion, etc., the analyt filled in the respective cavities 107 may also move into the gel material 103. In dependence of the isoelectric point of different fractions (for instance of different proteins) contained in the analyt, there may be an electrical force acting on the charged particles in dependence of the local pH value which increases from the left-hand side to the right-hand side of the gel strip 103. Therefore, the particles or fractions of the analyte may be transported from the first electrode 108 towards the second electrode 109 under the influence of an electrical force. In dependence of the isoelectric point of a particular fraction of the analyte, it may happen that the analyt comes to a part of the gel 103 where the local pH value is such that, effectively, no further electric force acts on such a particle. Thus, each of the fractions included in the analyt 106 will be immobilized at a particular portion of the gel material 103. Therefore, bands or fractions of the analyt may accumulate and may be immobilized at particular portions of the gel strip 103.

In the context of an off-gel electrophoresis experiment as shown in Fig. 1, it may also happen that a fraction of the analyt which is trapped at a particular position within the gel material 103 is transported, for instance by processes like diffusion, into a corresponding cavity 107, that is to say in the buffer or other liquid solution 106 filled in such a cavity 107. Therefore, after having carried out such an experiment, the fluid may be recovered from a corresponding part of the gel 103 and/or from a respective compartment frame 105 cavity 107 located above such a portion of the gel 103.

As can be taken from the above description, the first operation state of the apparatus 100 shown in Fig. 1 is an operation state in which the apparatus 100 performs a gel electrophoresis device. After having trapped the fractions of the analyte 106 to be separated in respective portions of the gel strip device 101, the fractions may be recovered or eluted from the gel strip device 101, in a manner as shown in Fig. 2.

In the described embodiment, the apparatus 100 is reassembled in order to recover separated fluid components trapped in the gel material 103 and/or in the compartments 107. According to the described embodiment, the gel strip device 101 is rearranged or remounted in order to recover the different fractions of the sample to be analyzed. However, this recovery can be done as well in the first operation state of the apparatus 100 shown in Fig. 1.

As shown in **Fig. 2**, a container 200 is provided below the gel strip device 101. Then, a centrifugation force (which is symbolized schematically with reference numeral 204) is applied so as to generate a mechanical force acting on the fractions trapped in a corresponding part of the gel material 103 and/or in the compartment frame cavity 107 located above this portion. The centrifuge is operated in such a manner that mechanical force is applied to the molecules to be eluted, which force is oriented (or has at least a force component) essentially perpendicular to an extension of the gel 103 and perpendicular to the normal vector of the paper plane of Fig. 2. Reference numeral 203 indicates schematically the motion direction of the particles to be recovered under the influence of the force.

Consequently, the components which are recovered from the gel material 103 traverse the pores of the porous substrate 104 due to their relatively small size and low viscosity. On the other hand, due to their larger size and their large viscosity, the gel material 103 is essentially prevented from passing the pores of the porous substrate 104. Therefore, the recovered sample 201 is accumulated in cavities 202 of the container 200.

The container 200 is adapted for containing the sample 201 recovered or eluted from the gel strip device 101. The container 200 is positioned for receiving the sample 201 recovered from the gel strip device 201 and passed through the porous substrate 104 of the gel strip device 101.

As can further be taken from Fig. 2, the plurality of container segments or cavities 202 are each adapted for receiving sample recovered from an assigned portion of the gel strip device 101. Thus, by aligning or adjusting the orientation of the gel material 103 and of the container 200 relative to each other, it can be defined which of the cavities 202 receives material dissolved from the gel material 103 located above.

As can further be taken from Fig. 2, the force generating device of the apparatus 100 is a centrifuge to generate the mechanical force by rotating the gel strip device 101. Optionally, the recovery of the material can be promoted additionally in that the force generating device additionally generates an overpressure acting on the upper side of the gel strip device 201 and/or generates low pressure acting at the lower side of the gel strip device 101.

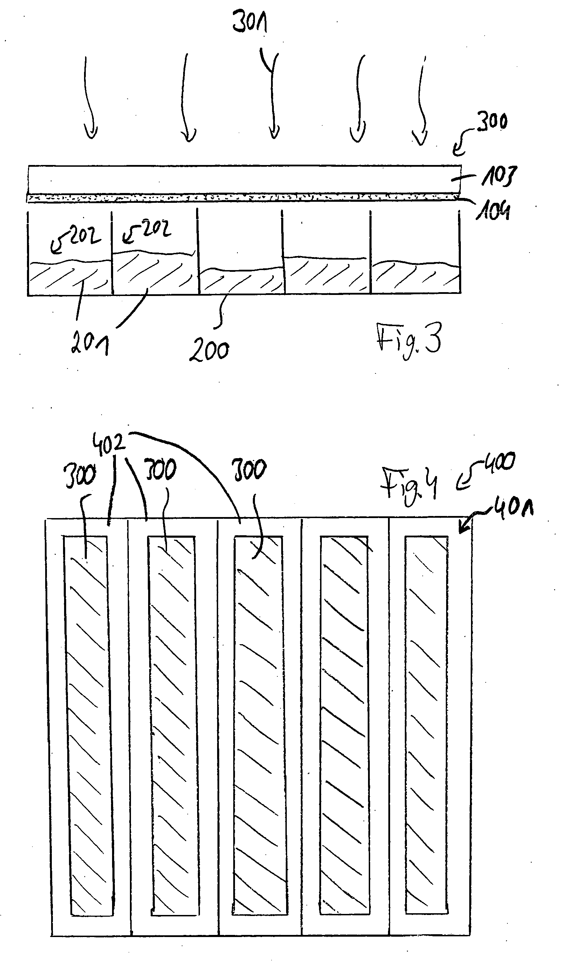

In the following, referring to Fig. 3, an apparatus for recovering a fluid sample from a gel strip device 300 will be described.

The gel strip device 300 differs from the gel strip device 101 in that no compartment frame 105 is provided. Hence, the gel strip device 400 is constituted by the porous substrate 104 and the gel material 103 which is deposited on the top of the porous substrate 104.

In the case of a gel electrophoresis experiment carried out by means of the gel strip device 300, the electrodes 108, 109 may be directly contacted with the gel material 103, and the sample may be inserted in the gel material 103. Hence, an electric field may be generated along the extension of the gel material 103 so that, in dependence of their respective isoelectric points, the different components of the sample are trapped at different portions of the gel material 103.

Fig. 3 shows the apparatus in an operation state in which the different components trapped along the gel 103 are to be recovered. For this purpose, an overpressure 301 is applied so that a mechanical force is acting on the material to be recovered so that the material to be recovered traverses the porous substrate 104 and accumulates in the cavities 202 of the reception 200.

In the following, referring to **Fig. 4**, a part of an apparatus 400 for recovering a fluid sample from a gel strip device 300 will be described.

The apparatus 400 comprises a receptacle 401 adapted for receiving a plurality of gel strip devices 300 in correspondingly shaped and dimensioned receptacle portions 402.

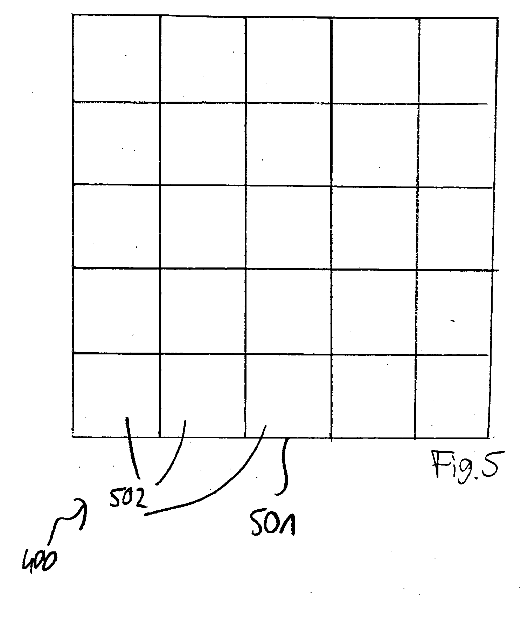

**Fig. 5** shows another part of the apparatus 400.

Namely, a container 501 is shown which comprises a plurality of matrix-like formed and arranged cavities 502. When the matrix array-like structure of Fig. 5 is located below the reception 401 and aligned to the reception 401, and when mechanical force is applied from above to the gel strips 300 located in the receptions 401, then material from the gel strip devices 300 can be recovered and can be accumulated in a corresponding one of the cavities 502.

It should be noted that the term "comprising" does not exclude other elements or steps and the "a" or "an" does not exclude a plurality. Also elements described in association with different embodiments may be combined. It should also be noted that reference signs in the claims shall not be construed as limiting the scope of the claims.

## Claims

1. An apparatus (100) for recovering sample from a gel strip which has been subject of gel electrophoresis, the apparatus (100) comprising
a gel strip device (101) having a gel material (103) of said gel strip, and a permeable substrate (104) supporting the gel material (103),
a compartment frame (105) to be located close to the gel material (103), wherein the compartment frame (105) comprises a plurality of cavities (107), each being configured to receive a respective fluid (106) being fluid-coupled to the gel material (103),
a force generating unit adapted to generate a mechanical force acting on the fluid in the gel strip device (101) and/or in the cavity (107) of the compartment frame (105) to pass through the permeable substrate (104), and
a container (200) having a plurality of container segments (202), each adapted for receiving and holding sample recovered from an assigned portion of the gel strip after having passed through the permeable substrate.

2. The apparatus (100) of claim 1, wherein
the gel material (103) is provided on the permeable substrate (104) in a manner of at least one of generating a pH gradient and having a varying pH value along an extension of the permeable substrate (104).

3. The apparatus (100) of claim 1 or 2, wherein
the gel material (103) is to be located between the compartment frame (105) and the permeable substrate (104).

4. The apparatus (100) of any one of the above claims, wherein the permeable substrate (104) comprises a polymer material or an inorganic porous material.

5. The apparatus (100) of any one of the above claims, wherein the permeable substrate (104) comprises pores.

6. The apparatus (100) of the preceding claim, comprising at least one of:
the pores are formed by means of a laser;
the pores have dimensions in the range between 1 nm and 10 µm or between 10 nm and 1 µm;
the pores have dimensions adapted to substantially retain the gel material (103) while allowing the fluid to pass through the pores.

7. The apparatus (100) of any one of the above claims, wherein
the compartment frame (105) is detachable from the gel material (103) provided on the permeable substrate (104).

8. The apparatus (100) of any one of the above claims, comprising at least one of:
a receptacle (102) for receiving the gel strip device (101);
a receptacle (401) having a plurality of receptacle portions (402) each adapted for receiving an individual gel strip device (300).

9. The apparatus (100) of any one of the above claims, wherein the force generating unit comprises at least one of:
a centrifuge to generate the mechanical force by rotating the gel strip device (101);
a device for generating a pressure difference between an upper side and a lower side of the gel strip device (101);
a device for generating an overpressure at an upper side of the gel strip device (101);
a device for generating a low pressure at a lower side of the gel strip device (101).

## Patentansprüche

1. Vorrichtung (100) zur Rückgewinnung einer Probe von einem Gelstreifen, die durch Gelelektrophorese untersucht wurde, wobei die Vorrichtung (100) aufweist:
eine Gelstreifeneinheit (101) mit einem Gelmaterial (103) des Gelstreifens und einem durchlässigen Substrat (104) als Träger des Gelmaterials (103),
einen unmittelbar am Gelmaterial (103) angebrachten Trennrahmen (105), wobei der Trennrahmen (105) eine Vielzahl von Hohlräumen (107) aufweist, die jeweils zum Aufnehmen eines entsprechenden Fluids (106) dienen, das direkt mit dem Gelmaterial (103) in Verbindung steht,
eine Krafterzeugungseinheit zum Erzeugen einer mechanischen Kraft, die auf das Fluid in der Gelstreifeneinheit (101) und/oder im Hohlraum (107) des Trennrahmens (105) ausgeübt wird, damit das Fluid durch das durchlässige Substrat (104) tritt, und
einen Behälter (200) mit einer Vielzahl von Behältersegmenten (202), die jeweils zum Aufnehmen und Aufbewahren der Probe dienen, die nach dem Durchtreten durch das durchlässige Substrat von einem bestimmten Teil des Gelstreifens wiedergewonnen wurde.

2. Vorrichtung (100) nach Anspruch 1, wobei
das Gelmaterial (103) so auf dem durchlässigen Substrat (104) aufgebracht ist, dass es einen pH-Gradienten erzeugt und/oder entlang einer Dimension des durchlässigen Substrats (104) einen veränderlichen pH-Wert aufweist.

3. Vorrichtung (100) nach Anspruch 1 oder 2, wobei
sich das Gelmaterial (103) zwischen dem Trennrahmen (105) und dem durchlässigen Substrat (104) befindet.

4. Vorrichtung (100) nach einem der vorhergehenden Ansprüche, wobei das durchlässige Substrat (104) ein Polymer oder einen anorganischen porösen Stoff aufweist.

5. Vorrichtung (100) nach einem der vorhergehenden Ansprüche, wobei das durchlässige Substrat (104) Poren aufweist.

6. Vorrichtung (100) nach dem vorhergehenden Anspruch, die mindestens eines der folgenden Merkmale aufweist:
die Poren werden unter Verwendung eines Lasers gebildet;
die Poren weisen Abmessungen in Bereich zwischen 1 nm und 10 µm oder zwischen 10 nm und 1 µm auf;
die Poren weisen solche Abmessungen auf, dass sie das Gelmaterial (103) im Wesentlichen zurückhalten, während sie das Fluid durchlassen.

7. Vorrichtung (100) nach einem der vorhergehenden Ansprüche, wobei
der Trennrahmen (105) vom Gelmaterial (103) abgenommen werden kann, das auf dem durchlässigen Substrat (104) aufgebracht ist.

8. Vorrichtung (100) nach einem der vorhergehenden Ansprüche, die mindestens eines der folgenden Merkmale aufweist:
ein Behältnis (102) zum Aufnehmen der Gelstreifeneinheit (101);
ein Behältnis (401) mit einer Vielzahl von Behältnisabteilen (402), die jeweils zum Aufnehmen einer einzelnen Gelstreifeneinheit (300) dienen.

9. Vorrichtung (100) nach einem der vorhergehenden Ansprüche, wobei die Krafterzeugungseinheit mindestens eines der folgenden Merkmale aufweist:
eine Zentrifuge zum Erzeugen der mechanischen Kraft durch Schleudern der Gelstreifeneinheit (101);
eine Einheit zum Erzeugen einer Druckdifferenz zwischen einer Oberseite und einer Unterseite der Gelstreifeneinheit (101);
eine Einheit zum Erzeugen eines Überdrucks an einer Oberseite der Gelstreifeneinheit (101);
eine Einheit zum Erzeugen eines Unterdrucks an einer Unterseite des der Gelstreifeneinheit (101).

## Revendications

1. Appareil (100) pour récupérer un échantillon sur une bande de gel qui a été soumise à une électrophorèse sur gel, l'appareil (100) comprenant
un dispositif à bande de gel (101) comportant un matériau de type gel (103) de ladite bande de gel, et un substrat perméable (104) supportant le matériau de type gel (103),
un châssis à compartiments (105) à placer près du matériau de type gel (103), dans lequel le châssis à compartiments (105) comprend une pluralité de cavités (107), chacune des cavités étant configurée pour recevoir un fluide (106) respectif couplé par voie fluidique au matériau de type gel (103),
une unité génératrice de force à même de générer une force mécanique agissant sur le fluide dans le dispositif à bande de gel (101) et/ou dans la cavité (107) du châssis à compartiments (105) pour traverser le substrat perméable (104), et
un récipient (200) comportant une pluralité de segments de récipient (202), chacun des segments étant à même de recevoir et de conserver l'échantillon récupéré dans une partie attribuée de la bande de gel après avoir traversé le substrat perméable.

2. Appareil (100) suivant la revendication 1, dans lequel
le matériau de type gel (103) est déposé sur le substrat perméable (104) de manière à générer un gradient de pH et/ou à avoir un pH variable le long d'une extension du substrat perméable (104).

3. Appareil (100) suivant la revendication 1 ou 2, dans lequel le matériau de type gel (103) doit se trouver entre le châssis à compartiments (105) et le substrat perméable (104).

4. Appareil (100) suivant l'une quelconque des revendications précédentes, dans lequel le substrat perméable (104) comprend un matériau polymère ou un matériau poreux inorganique.

5. Appareil (100) suivant l'une quelconque des revendications précédentes, dans lequel le substrat perméable (104) comprend des pores.

6. Appareil (100) suivant la revendication précédente, comprenant au moins une des particularités suivantes :
les pores sont formés au moyen d'un laser ;
les dimensions des pores sont comprises entre 1 nm et 10 µm ou entre 10 nm et 1 µm ;
les dimensions des pores sont adaptées pour retenir en grande partie le matériau de type gel (103) tout en permettant au fluide de passer à travers les pores.

7. Appareil (100) suivant l'une quelconque des revendications précédentes, dans lequel
le châssis à compartiments (105) est détachable du matériau de type gel (103) déposé sur le substrat perméable (104).

8. Appareil (100) suivant l'une quelconque des revendications précédentes, comprenant au moins une des particularités suivantes :
un réceptacle (102) pour recevoir le dispositif à bande de gel (101) ;
un réceptacle (401) comportant une pluralité de parties de réceptacle (402) chacune des parties étant à même de recevoir un dispositif à bande de gel (300) individuel.

9. Appareil (100) suivant l'une quelconque des revendications précédentes, dans lequel l'unité génératrice de force comprend au moins une des particularités suivantes :
une centrifugeuse pour générer la force mécanique en entraînant en rotation le dispositif à bande de gel (101) ;
un dispositif pour générer une différence de pression entre un côté supérieur et un côté inférieur du dispositif à bande de gel (101) ;
un dispositif pour générer une surpression sur un côté supérieur du dispositif à bande de gel (101) ;
un dispositif pour générer une basse pression sur un côté inférieur du dispositif à bande de gel (101).
